# EUROPEAN PATENT APPLICATION

(11) **EP 4 620 909 A1**
(43) Date of publication of application: **24.09.2025**
(21) Application number: 23890511.1
(22) Date of filing: 26.10.2023
(51) Int. Cl.: C01B 25/45

(54) **PHOSPHATE PRECURSOR AND PREPARATION METHOD THEREFOR, POSITIVE ELECTRODE MATERIAL AND PREPARATION METHOD THEREFOR, POSITIVE ELECTRODE SHEET AND SECONDARY BATTERY**

(30) Priority: 16.11.2022 CN 202211435133
(71) Applicant: Pinnacle Material Technologies Co., Ltd, Shenzhen, Guangdong 518055 (CN); Shanghai Jayson New Energy Materials Co., Ltd, Shanghai 201306 (CN)
(72) Inventor: XU, Jian, Shenzhen, Guangdong 518055 (CN); LI, Shiwen, Shenzhen, Guangdong 518055 (CN)
(74) Representative: Longoni, Alessandra
(86) International application number: PCT/CN2023/126835
(87) International publication number: WO 2024/104075

(57) **Abstract**

Disclosed is a phosphate precursor, which has a chemical formula of LiₓM_{y}(PO₄)_{(x+y)/2}A_{z}•wH₂O, where M is a transition metal element selected from one or more of Fe, Ti, V, Cr, Ni, Co, Mn, Al, Nb, Y, Zr, Sb, Mo, Sn, and Ce, A is one or more of F⁻, OH⁻, CO₃²⁻, C₂O₄²⁻, and O²⁻; and 0.5≤x<1.2, 0.5<y≤1, 0≤z≤1, and 0.1≤w<8. The phosphate precursor has good uniformity, contains crystal water, and exhibits excellent structural stability, and can be used to prepare olivine-type phosphate cathode material through sintering at a low temperature of 260°C-600°C; and the phosphate precursor is blended with a carbon source and is subjected to heat treatment to obtain carbon-contained cathode material, which has good electrochemical properties.

## Description

### TECHNICAL FIELD

The present disclosure relates to the technical field of secondary batteries, and particularly relates to a phosphate precursor and a preparation method therefor, cathode material and a preparation therefor, a cathode sheet and a secondary battery.

### BACKGROUND

At present, the mainstream preparation processes of phosphate cathode material for secondary lithium-ion batteries can be categorized into a solid-state method and a liquid-phase method. Specifically, the solid-state method involves mixing the raw material by using mechanical grinding, followed by a reaction at a high temperature of 700-850°C under the protection of an inert atmosphere, so as to prepare the olivine-type phosphate cathode material. The solid-state method is easy to operate, but is prone to segregation due to uneven mixing of raw material, resulting in poor consistency of a product and affecting electrochemical properties of the phosphate cathode material. Moreover, the method requires a high temperature for sintering and tedious procedures, causing great consumption of energy and lengthy production cycle.

The liquid-phase method is easier to mix reactants evenly than the solid-phase method. By leveraging the solubility of reaction raw material in a liquid phase, the liquid-phase method can prepare nano-scale and even molecular-level mixed material.

The common liquid-phase method is mainly hydrothermal synthesis. The hydrothermal synthesis generally uses ferrous sulfate, phosphoric acid, and lithium hydroxide as raw material, with a synthesis temperature of approximately 140-210°C, a pressure of approximately 1.4 MPa, and reaction time of approximately 3-24 h. After the hydrothermal synthesis is completed, the material is filtered, washed, and vacuum-dried to obtain lithium iron phosphate, and carbon coating can be applied onto the lithium iron phosphate to improve its electrochemical properties. A final product prepared by the method usually exhibits good electrochemical properties, but a lithium-ion utilization rate of the method is only about 1/3, resulting in high costs of raw material but low yield. Moreover, the method requires high-pressure equipment, making the method impossible to realize the large-scale production.

The Chinese Patent CN103259015B provides a two-step method, where lithium phosphate (Li₃PO₄) is prepared first, the hydrothermal synthesis is then adopted to prepare the lithium iron phosphate, and the resulting product has uniform particles and good consistency. However, the method suffers a low yield, and requires a high pressure in the preparation process, posing great safety hazards. Moreover, it is very difficult and costly to design and manufacture large-scale high-temperature and high-pressure reactors, making the large-scale production impossible.

In addition, a sol-gel process method is adopted to prepare the phosphate cathode material, which uses raw material that are easily decomposed at high temperatures, such as nitrates and acetates (Fe(NO₃)₂, H₃PO₄ and LiCH₃COO), as precursors to synthesize gel, and the gel is then sintered at 600-700°C in a nitrogen atmosphere for 4-24 h to obtain LiFePO₄ powder. However, the sol-gel method needs to use expensive raw material, making it difficult to realize industrial application.

The Chinese Patent CN112086635A provides a preparation method for phosphate cathode material using lithium carbonate, phosphate, iron nitrate, a strong oxidizing agent, strong acid, a polymer monomer, and the like, where a self-heating evaporation method is adopted to reduce energy consumption, such that the polymerization of the polymer monomer and the nucleus formation of lithium iron phosphate are implemented simultaneously, the morphology and particle size of final product are controlled, and the phosphate cathode material with good consistency is accordingly obtained. However, the method needs to remove by-products such as ammonium nitrate under a high temperature of 700-780°C, so as to prepare the lithium iron phosphate. The lithium iron phosphate prepared according to the method exhibits relatively good electrochemical properties, but strong oxidizing agent and acid are required in the preparation process, posing serious safety hazards. Moreover, removal of the by-products, such as ammonium nitrate, at a high temperature, generates a large amount of nitrogen oxide gas, which leads to environmental pollution and serious safety hazards.

### SUMMARY

In view of deficiencies in the prior art, a first objective of the present disclosure is to provide a phosphate precursor, which has good uniformity, contains crystal water, and has excellent structural stability, and can be used to prepare olivine-type phosphate cathode material through sintering at a low temperature of 260°C-600°C, and the cathode material has good electrochemical properties.

The phosphate precursor, with a chemical formula of LiₓM_{y}(PO₄)_{(x+y)/2}A_{z}•wH₂O, where M is a transition metal element selected from one or more of Fe, Ti, V, Cr, Ni, Co, Mn, Al, Nb, Y, Zr, Sb, Mo, Sn, Ce; and A is one or more of F⁻, OH⁻, CO₃²⁻, C₂O₄²⁻, and O²⁻, where 0.5≤x<1.2, 0.5<y≤1, 0≤z≤1, and 0.1≤w<8. Preferably, the transition metal element includes one or two of Fe, Mn and Co.

Preferably, the phosphate precursor has characteristic peaks F1: 9.0°-11.5°, F2: 22.1°-22.8°, F3: 22.9°-23.5°, and F4: 24.5°-25.1° in an XRD pattern at a 2θ diffraction angle using a Cu target Kα1, and a peak intensity ratio of the characteristic peak F1 to the characteristic peak F3 is 0.02-100.

Preferably, a mass fraction of lithium in the phosphate precursor is 1%-5.3%, and a mass ratio of the lithium to the transition metal element is 5.8%-30.3%, and a mass ratio of the lithium to the phosphorus is 14.8%-31.6%.

Preferably, a D₅₀ value of particles of the phosphate precursor is 0.05-20 µm.

Preferably, morphology of the phosphate precursor is one or more of spherical, quasi-spherical, plate-like, and rod-like.

In view of deficiencies in the prior art, a second objective of the present disclosure is to provide a preparation method for the phosphate precursor in the present disclosure, the colloidal auxiliary agent is added to at least one of the transition metal salt solution, the lithium source solution, or the phosphorus source solution to prepare a colloidal solution; the colloidal solution and raw material are mixed and stirred under a colloidal system to induce the multi-phase precipitation, a repulsive effect of the surfactant and the polymer in the colloidal solution is used to prevent the aggregation of colloidal particles, such that the distribution of different particles in the precipitation process can achieve a mixed state of nanometer and sub-micrometer levels; by controlling the addition of the dispersing agent, colloidal equilibrium is broken and different particles are accordingly combined into the precipitate; and the precipitate is then aged, washed and dried to obtain the phosphate precursor with good uniformity.

In order to achieve the above objective, a technical solution adopted by the present disclosure is as follows:
a preparation method for the phosphate precursor, including the following steps:
step S1. dissolving soluble transition metal salt in a solvent to obtain a transition metal salt solution, dissolving soluble lithium salt in a solvent to obtain a lithium source solution, and dissolving a phosphorus-containing compound in a solvent to obtain a phosphorus source solution;
step S2. dispersing a polymer in a solvent and stirring to obtain a colloidal auxiliary agent;
step S3. adding the colloidal auxiliary agent to at least one of the transition metal salt solution, or the lithium source solution, or the phosphorus source solution obtained in the step S1 to obtain a colloidal solution;
step S4. adding the colloidal solution obtained in the step S3, a surfactant, a dispersing agent, and the remaining solutions obtained in the step S1 into a reactor, controlling a temperature, mixing and stirring under atmospheric conditions to induce multi-phase precipitation to obtain a precipitate; and
step S5. obtaining the phosphate precursor after the precipitate obtained in the step S4 is aged, washed and dried.

Preferably, in the step S1, a solid content of the transition metal salt solution is 1.5%-30%, a solid content of the lithium source solution is 1.1%-27%, a solid content of the phosphorus source solution is 1%-25%, and the transition metal salt solution in the step S1 includes one or more of the metal elements Fe, Ti, V, Cr, Ni, Co, Mn, Al, Nb, Y, Zr, Sb, Mo, Sn, and Ce.

Preferably, a preparation method for the colloidal auxiliary agent in the step S2 involves adding a polymer to the solvent, heating to 20°C-100°C, and stirring for 30-300 min; a weight percentage of the polymer in the colloidal auxiliary agent is 0.1%-20%, and the polymer is one or a mixture of methyl cellulose, starch, polyacrylamide, polyvinyl pyrrolidone, polypropylene alcohol, agar, carrageenan, gum arabic, guar gum, tamarind gum.

Preferably, in the step S3, a weight percentage of the polymer in the colloidal solution is 0.02%-2%.

Preferably, the atmospheric conditions in the step S4 are nitrogen, argon or carbon dioxide.

Preferably, the drying operation in the step S5 involves heating to 70°C-200°C in a vacuum environment and drying to a constant weight, or heating to 100°C-200°C in an air environment and drying to a constant weight, and more preferably, heating to 70°C-200°C in a vacuum environment and drying to a constant weight.

In view of deficiencies in the prior art, a third objective of the present disclosure is to provide a preparation method for phosphate cathode material, which possesses simple procedure, performs heat treatment at a lower temperature, consumes less energy, and requires low costs, without producing toxic and harmful gases such as nitrogen oxides, has less pollution emissions, and has good safety.

A preparation method for phosphate cathode material, the phosphate precursor prepared above is heated to 260°C-600°C in an oxygen-free atmosphere of argon, nitrogen, or a hydrogen-argon mixture, and heat treatment is then performed for 2-72 h before cooling down.

In view of deficiencies in the prior art, a fourth objective of the present disclosure is to provide phosphate cathode material, which exhibits low production cost, good performance and stability.

Phosphate cathode material, which is obtained by the foregoing preparation method for phosphate cathode material, and achieves a discharge specific capacity at 0.1C of 100-140 mAh/g at room temperature.

In view of deficiencies in the prior art, a fifth objective of the present disclosure is to provide a preparation method for carbon-contained cathode material, which is simple to prepare, performs heat treatment at a lower temperature, consumes less energy, and requires lower costs, without producing toxic and harmful gases such as nitrogen oxides, and has good safety.

A preparation method for carbon-contained cathode material, the phosphate precursor or the phosphate cathode material or the carbon source are mixed and heated to 260°C-600°C in an oxygen-free atmosphere of argon, nitrogen, or a hydrogen-argon mixture, and heat treatment is then performed for 2-72 h before cooling down.

Preferably, the carbon source is one or more of glucose, fructose, sucrose, starch, graphite, graphene, carbon nanotube, or polyvinyl pyrrolidone.

In view of deficiencies in the prior art, a sixth objective of the present disclosure is to provide carbon-contained cathode material, which exhibits good performance and stability.

Carbon-contained cathode material, which is obtained by the foregoing preparation method for carbon-contained cathode material, and achieves a discharge specific capacity of 140-160 mAh/g at 0.1C at room temperature.

Preferably, a mass ratio of carbon to lithium in the carbon-contained cathode material is 11.4%-182.1%, and the carbon can be sourced from one or more of amorphous carbon, graphite, graphene, and carbon nanotube.

In view of deficiencies in the prior art, a seventh objective of the present disclosure is to provide a cathode sheet, which exhibits good performance and stability.

A cathode sheet, including a cathode current collector and a cathode coating applied to at least one surface of the cathode current collector, where the cathode coating includes the carbon-contained cathode material.

In view of deficiencies in the prior art, an eighth objective of the present disclosure is to provide a secondary battery, which exhibits good performance and stability.

A secondary battery, including the cathode sheet prepared above.

Compared with the prior art, the present disclosure has the following beneficial effects, the phosphate precursor of the present disclosure is a hydrate, has good uniformity and good structural stability. The olivine-type phosphate cathode material can be prepared through sintering at a low temperature of 260°C-600°C, without producing toxic and harmful gases such as nitrogen oxides, and the cathode material has good electrochemical properties. In the preparation method for the phosphate precursor in the present disclosure, the colloidal solution is prepared by adding the colloidal auxiliary agent; the multi-phase precipitation is performed under a colloidal system, a repulsive effect of the surfactant and the polymer in the colloidal solution is used to prevent the aggregation of colloidal particles, such that the distribution of different particles in the precipitation process can achieve a mixed state of nanometer and sub-micrometer levels; by controlling the addition of the dispersing agent, colloidal equilibrium is broken and different particles are accordingly combined into the precipitate; and the precipitate is then aged, washed and dried to obtain the phosphate precursor with good uniformity.

### BRIEF DESCRIPTION OF THE DRAWINGS

FIG. 1 is a SEM of a phosphate precursor according to Example 1 of the present disclosure.
FIG. 2 is an XRD pattern of a phosphate precursor according to Example 1 of the present disclosure.
FIG. 3 is a SEM of phosphate cathode material according to Example 1 of the present disclosure.
FIG. 4 is an XRD pattern of phosphate cathode material according to Example 1 of the present disclosure.
FIG. 5 is an XRD pattern of phosphate cathode materialaccording to Comparative Example 1 of the present disclosure.
FIG. 6 is discharge curves of a battery made from carbon-contained cathode material obtained in Examples 11 and 12 of the present disclosure.

### DETAILED DESCRIPTIONS OF THE EMBODIMENTS

The present disclosure will be described in further detail below in conjunction with specific embodiments and accompanying drawings, but the embodiments of the present disclosure are not limited thereto.

The present disclosure provides a phosphate precursor, which has a chemical formula of LiₓM_{y}(PO₄)_{(x+y)/2}A_{z}•wH₂O, where M is a transition metal element selected from one or more of Fe, Ti, V, Cr, Ni, Co, Mn, Al, Nb, Y, Zr, Sb, Mo, Sn, Ce; and A is one or more of F⁻, OH⁻, CO₃²⁻, C₂O₄²⁻, and O²⁻, where 0.5≤x<1.2, 0.5<y≤1, 0≤z≤1, and 0.1≤w<8. The phosphate precursor of the present disclosure is a hydrate with bound water. The transition metal elements, lithium, and phosphorus in the phosphate precursor of the present disclosure are evenly distributed to form a stable structure, and cathode material can be prepared by sintering the phosphate precursor at a temperature of 260°C-600°C to prepare cathode material, with a simple process and low energy consumption.

In some examples, the phosphate precursor has characteristic peaks F1: 9.0°-11.5°, F2: 22.1°-22.8°, F3: 22.9°-23.5°, and F4: 24.5°-25.1° in an XRD pattern at a 2θ diffraction angle using a Cu target Kα1, and a peak intensity ratio of the characteristic peak F1 to the characteristic peak F3 is 0.02-100.

In some examples, a mass fraction of lithium in the phosphate precursor is 1%-5.3%, and a mass ratio of the lithium to the transition metal element is 5.8%-30.3%, and a mass ratio of the lithium to the phosphorus is 14.8%-31.6%. Preferably, the mass fraction of the lithium in the phosphate precursor is 1%, 1.2%, 1.5%, 1.7%, 1.9%, 2%, 2.5%, 3%, 3.4%, 4%, 4.5%, 5%, 5.3%, and a mass ratio of the lithium to the transition metal element is 6.2%, 7.5%, 8.7%, 9.9%, 11.1%, 12.4%, 13.6%, 15.5%, 17.7%, 20.7%, 24.8%, 27.3%, and a mass ratio of the lithium to phosphorus is 14.8%, 16.8%, 18.4%, 19.9%, 22.4%, 24.4%, 26.9%, 29.9%.

In some examples, the transition metal element is manganese.

In some examples, the transition metal element is iron.

In some examples, the transition metal element is iron and manganese, where a mass ratio of the iron to a total transition metal element is ≥ 0.1.

In some examples, a D₅₀ value of particles of the phosphate precursor is 0.05-20 µm. Preferably, the D₅₀ value of the particle of the phosphate precursor is 0.05 µm, 0.1 µm, 0.5 µm, 0.9 µm, 1 µm, 1.6 µm, 3µm, 4 µm, 8 µm, 10 µm, 15 µm, 18 µm, 19 µm, 20µm.

In some examples, morphology of the phosphate precursor is one or more of spherical, quasi-spherical, plate-like, and rod-like.

The present disclosure provides a preparation method for the phosphate precursor, including the following steps:
step S1. dissolve soluble transition metal salt in a solvent to obtain a transition metal salt solution, dissolve soluble lithium salt in a solvent to obtain a lithium source solution, and dissolve a phosphorus-containing compound in a solvent to obtain a phosphorus source solution;
step S2. disperse a polymer in a solvent and stir to obtain a colloidal auxiliary agent;
step S3. add the colloidal auxiliary agent to at least one of the transition metal salt solution, or the lithium source solution, or the phosphorus source solution obtained in the step S1 to obtain a colloidal solution;
step S4. add the colloidal solution obtained in the step S3, a surfactant, a dispersing agent, and the remaining solutions obtained in the step S1 into a reactor, control a temperature, mix and stir under atmospheric conditions to induce multi-phase precipitation to obtain a precipitate; and
step S5. obtain the phosphate precursor after the precipitate obtained in the step S4 is aged, washed and dried.

In the preparation method for the phosphate precursor in the present disclosure, the colloidal auxiliary agent is added to at least one of the transition metal salt solution, the lithium source solution, or the phosphorus source solution to prepare a colloidal solution; the colloidal solution and raw material are mixed and stirred under a colloidal system to induce the multi-phase precipitation, a repulsive effect of the surfactant and the polymer in the colloidal solution is used to prevent the aggregation of colloidal particles, such that the distribution of different particles in the precipitation process can achieve a mixed state of nanometer and sub-micrometer levels; by controlling the addition of the dispersing agent, colloidal equilibrium is broken and different particles are accordingly combined into the precipitate; and the precipitate is then aged, washed and dried to obtain the phosphate precursor with good uniformity.

Specifically, the solvent can be water, ethanol, or isopropanol. The atmospheric conditions include an oxygen-free atmosphere of argon, nitrogen, or hydrogen-argon mixed gas.

Cations of the soluble transition metal salt are one or more of ions formed by the loss of one or more electrons from atoms such as Fe, Ti, V, Cr, Ni, Co, Mn, Al, Nb, Y, Zr, Sb, Mo, Sn, Ce, and anions thereof can be one or more of SO₄²⁻, SO₃²⁻, NO³⁻, Cl⁻, CH₃COO⁻, C₆H₅O₇³⁻. Preferably, the soluble transition metal salt is one or more of iron salt, manganese salt, or cobalt salt, where the iron salt includes one or more of ferrous sulfate, ferrous chloride, ferrous nitrate, ferrous acetate, ferrous sulfite, ferric sulfate, ferric chloride, or ferric nitrate; the manganese salt include one or more of manganese sulfate, manganese nitrate, manganese chloride, manganese acetate, manganese citrate, or manganese sulfite, and the cobalt salt include one or more of cobalt sulfate, cobalt nitrate, cobalt chloride, cobalt acetate, cobalt citrate, and cobalt sulfite.

The soluble lithium salt include one or more of lithium oxalate, lithium sulfate, lithium chloride, lithium nitrate, lithium sulfite, lithium chlorate, lithium perchlorate, lithium bromide, lithium bromate, lithium iodide, lithium thiocyanate, lithium nitrite, lithium formate, lithium acetate, and lithium citrate.

The phosphorus-containing compound includes one or more of phosphoric acid, monoammonium phosphate, diammonium phosphate, triammonium phosphate, monosodium phosphate, disodium phosphate, and trisodium phosphate.

The colloidal auxiliary agent includes one or a mixture of methyl cellulose, starch, polyacrylamide, polyvinyl pyrrolidone, polypropylene alcohol, polyacrylonitrile, agar, carrageenan, gum arabic, guar gum, or tamarind gum. The surfactant includes one or more of polyethylene glycol, CTAB, fatty alcohol polyoxyethylene ether, fatty acid polyoxyethylene ester, alkyl polyglucoside, alkyl alcohol amide, ethoxylated sorbitan fatty acid ester, and the like. The dispersing agent includes one or more of sodium hydroxide, sodium carbonate, sodium bicarbonate, ammonia, ammonium carbonate, ammonium bicarbonate, lithium hydroxide, lithium carbonate, lithium bicarbonate, potassium hydroxide, potassium carbonate, and potassium bicarbonate. A solid content of the dispersing agent is 1%-16%, and preferably 1%, 5%, 8%, 9%, 10%, 14%, 15%, 15.5% , 16%.

In some examples, a solid content of the transition metal salt solution is 1.5%-30%, a solid content of the lithium source solution is 1.1%-27%, and a solid content of the phosphorus source solution is 1%-25%. Preferably, the solid content of the transition metal salt solution is 1.5%-10%, 10%-20%, 20%-30%, and specifically, the solid content of the transition metal salt solution is 1.5%, 4%, 5%, 8%, 10%, 15%, 18%, 20%, 24%, 27%, 29%, 30%; preferably, the solid content of the lithium source solution is 1.1%-10%, 10%-15%, 15%-20%, 20%-27%, and specifically, the solid content of the lithium source solution is 1.1%, 4%, 5%, 8%, 10%, 15%, 18%, 20%, 24%, 27%; and preferably, the solid content of the phosphorus source solution is 1%-10%, 10%-15%, 15%-20%, 20%-25%, and specifically, the solid content of the phosphorus source solution is 1.5%, 4%, 5%, 8%, 10%, 15%, 18%, 20%, 24%, 25%. The solid contents of the transition metal salt solution, the lithium source solution, and the phosphorus source solution are set at a certain range ensures more complete and uniform reaction, such that the prepared phosphate precursor has better performance.

In some examples, a preparation method for the colloidal auxiliary agent in the step S2 involves adding a polymer to the solvent, heating to 20°C-100°C, and stirring for 30-300 min. Preferably, the heating temperature is 20°C-40°C, 40°C-60°C, 60°C-80°C, 80°C-100°C, and specifically, the heating temperature is 20°C, 30°C, 40°C, 50°C, 60°C, 70°C, 80°C, 90°C, 100°C; and preferably, the stirring and dispersion time is 30-60 min, 60-120 min, 120-300 min, and specifically, the stirring and dispersion time is 30 min, 60 min, 90 min, 120 min, 180 min, 300 min.

In some examples, a weight percentage of the polymer in the colloidal auxiliary agent is 0.1%-20%, and the polymer is one or a mixture of methyl cellulose, starch, polyacrylamide, polyvinyl pyrrolidone, polypropylene alcohol, agar, carrageenan, gum arabic, guar gum, tamarind gum. Preferably, the weight percentage of the polymer in the colloidal auxiliary agent is 0.1%-8%, 8%-16%, 16%-20%, and specifically, the weight percentage of the polymer in the colloidal auxiliary agent is 0.1%, 2%, 5%, 8%, 10%, 11%, 14%, 15%, 16%, 18%, 20%.

In some examples, in the step S3, a weight percentage of the polymer in the colloidal solution is 0.02%-2%, preferably, the weight percentage of the polymer in the colloidal solution is 0.02%-1%, 1%-2%, and specifically, the weight percentage of the polymer in the colloidal solution is 0.02%, 0.08%, 0.1%, 0.2%, 0.8%, 0.86%, 1%, 1.2%, 1.6%, 1.8%, 1.9%, 2%.

In some examples, the synthesis process in the step S4 requires the introduction of nitrogen, argon, or carbon dioxide gas for protection to prevent material oxidation and avoid segregation of element ratios during precipitation.

In some examples, the drying operation in the step S5 involves heating to 70°C-200°C in a vacuum environment and drying to a constant weight, or heating to 100°C-200°C in an air environment and drying to a constant weight, and preferably, heating to 70°C-200°C in a vacuum environment and drying to a constant weight. Drying is performed to remove free water from the material, to obtain a product containing crystallized water and with good stability.

A preparation method for phosphate cathode material, the phosphate precursor prepared above is heated to 260°C-600°C in an oxygen-free atmosphere of argon, nitrogen, or a hydrogen-argon mixture, and heat treatment is then performed for 2-72 h before cooling down. Preferably, the heating temperature can be 260°C, 280°C, 300°C, 350°C, 400°C, 450°C, 500°C, 550°C, 600°C. The heat treatment time can be 4 h, 8 h, 10 h, 16 h, 24 h, 30 h, 36 h, 48 h, 50 h, 60 h, 72 h.

Phosphate cathode material, which is obtained by the foregoing preparation method for phosphate cathode material. The phosphate cathode material, after being made into a lithium-ion battery, achieves a discharge specific capacity at 0.1C of 100-130 mAh/g at room temperature.

A preparation method for carbon-contained cathode material, the phosphate precursor prepared above is mixed with a carbon source, and heated to 260°C-600°C in an oxygen-free atmosphere of argon, nitrogen, or a hydrogen-argon mixture, and heat treatment is then performed for 2-72 h to obtain the carbon-contained cathode material. The carbon source is one or more of glucose, fructose, sucrose, starch, graphite, graphene, carbon nanotube, or polyvinyl pyrrolidone. The heating temperature is 260°C, 300°C, 350°C, 380°C, 400°C, 420°C, 450°C, 480°C, 500°C, 550°C, 600°C. The reaction time is 2 h, 4 h, 6 h, 8 h, 12 h, 15 h, 18 h, 20 h, 25 h, 29 h, 32 h, 37 h, 39 h, 40 h, 43 h, 46 h, 48 h, 50 h, 55 h, 60 h, 65 h, 70 h, 72 h.

In the carbon-contained cathode material, a mass ratio of carbon to lithium is 11.4%-182.1%, and the carbon can be one or more of amorphous carbon, graphite, graphene, and carbon nanotube, and preferably, the amorphous carbon and carbon nanotube. The carbon-contained cathode material, after being made into a lithium-ion battery, achieves a discharge specific capacity of 140-160 mAh/g at 0.1C at room temperature.

The carbon-contained cathode material, which is obtained by the foregoing preparation method for carbon-doped cathode material.

A cathode sheet, including a cathode current collector and a cathode coating applied to at least one surface of the cathode current collector, where the cathode coating includes the carbon-contained cathode material. The cathode sheet of the present disclosure exhibits excellent electrochemical properties.

A secondary battery, including the cathode sheet above.

### Example 1

Preparation of a phosphate precursor:
step S1: 278.01 g of ferrous sulfate heptahydrate (1 mol) was weighed and dissolved in 500 g of water by stirring to prepare a transition metal salt solution with a solid content of 19.5%; 50.95 g of lithium oxalate (0.5 mol) was weighed and dissolved in 700 g of water to prepare a lithium source solution with a solid content of 12.7%; and 115.29 g of phosphoric acid (85% phosphoric acid, 1 mol) was weighed, and 500 g of water was added to dilute and dissolved, to prepare a phosphorus source solution with a solute mass fraction of 15.9%;
step S2. 2 g of soluble starch was weighed and added into 10 g of water and boiled for 30 min to obtain a colloidal auxiliary agent with no significant white precipitate;
step S3. the colloidal auxiliary agent was added to the transition metal salt solution to obtain a colloidal solution, and obvious Tyndall effect could be observed;
step S4. 0.1 g of polyethylene glycol 4000 was used as a surfactant, 207.32 g of potassium carbonate (1.5 mol) was weighed and added into 500 g of water to dissolve to obtain a dispersing agent, the surfactant was added into a four-necked glass reactor containing 100 mL of water, the dispersing agent, the colloidal solution, as well as the lithium source solution and the phosphorus source solution prepared in the foregoing step were added into the four-necked glass reactor and stirred at 2000 rpm under nitrogen protection, a reaction temperature was controlled to be 55°C, and a feeding rate of the colloidal solution was controlled to be approximately 0.5 g/min, and a reaction pH value was controlled to be 4-12;
step S5. after addition of all the material was completed, the material were aged at 60°C for 24 h, washed and filtered under nitrogen protection, and then dried in vacuum at 100°C to obtain an iron-containing phosphate precursor.

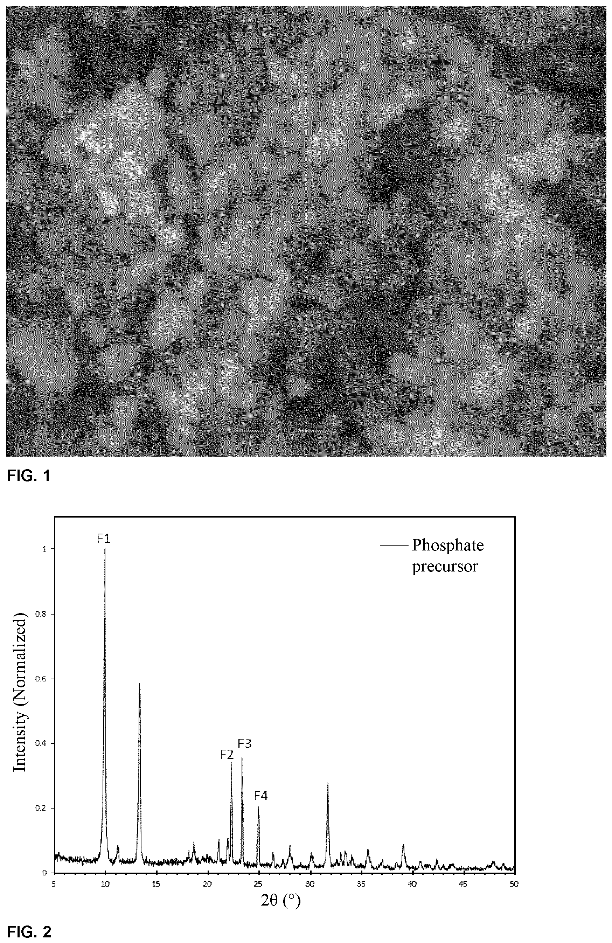

A D₅₀ value of the obtained phosphate precursor was 1.6 µm, with a quasi-spherical morphology, and an SEM image was shown in FIG. 1. An XRD pattern of the phosphate precursor was shown in FIG. 2, and the phosphate precursor had characteristic peaks F1: 9.0°-11.5°, F2: 22.1°-22.8°, F3: 22.9°-23.5°, and F4: 24.5°-25.1°, and a peak intensity ratio of the characteristic peak F1 to the characteristic peak F3 was 2.78. The elemental composition analysis indicated that a mass fraction of lithium in the phosphate precursor was 3.4%, a mass ratio of the lithium to the transition metal element was 12.4%, and a mass ratio of the lithium to the phosphorus in the phosphate precursor is 22.4%.

Preparation of cathode material:
In a nitrogen atmosphere, the phosphate precursor was heated to 300°C and subjected to heating treatment for 48 h, and then cooled and ground to obtain the phosphate cathode material.

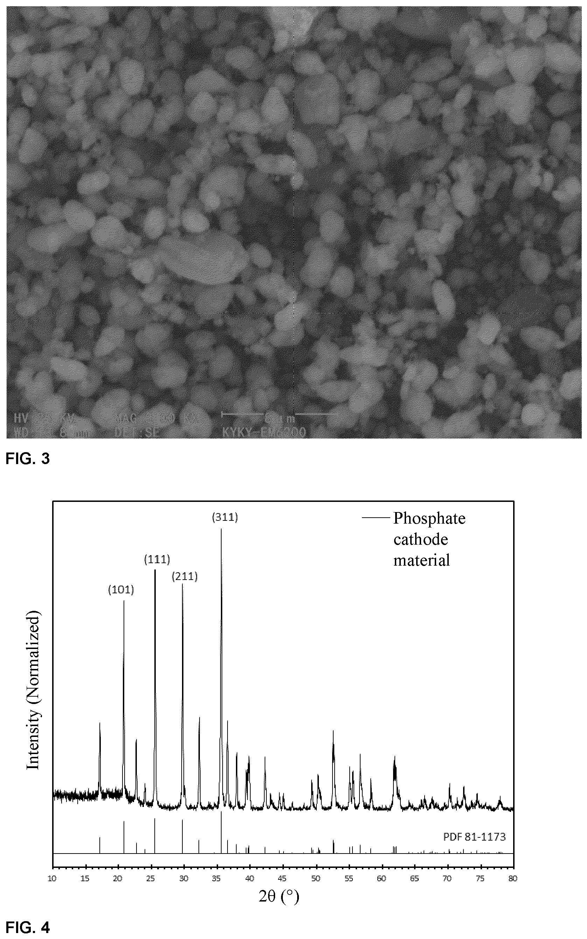

The phosphate cathode material was quasi-spherical, and an SEM image thereof was shown in FIG. 3. An XRD pattern of the phosphate cathode material conformed to characteristic peaks (101), (111), (211), (311) of lithium iron phosphate (PDF 81-1173), without any impurity peaks, as shown in FIG. 4.

### Example 2

Preparation of a phosphate precursor:
step S1: 169.01 g of manganese sulfate monohydrate (1 mol) was weighed and dissolved in 500 g of water by stirring to prepare a transition metal salt solution with a solid content of 22.6%; 43.26 g of lithium hydroxide monohydrate (wt=0.97, 1 mol) was weighed and dissolved in 500 g of water to prepare a lithium source solution with a solid content of 4.4%; and 156.01 g of monosodium phosphate dihydrate (1 mol) was weighed and dissolved in 500 g of water to prepare a phosphate source solution with a solute mass fraction of 18.3%;
step S2: 0.65 g of cationic polyacrylamide was weighed and stirred for 60 min at a temperature of 40°C, and dispersed in 20 g of water to obtain a first colloidal auxiliary agent; and 0.65 g of anionic polyacrylamide was weighed and stirred for 60 min at a temperature of 40°C, and dispersed in 20 g of water to obtain a second colloidal auxiliary agent;
step S3: the first colloidal auxiliary agent was taken and added into the transition metal salt solution to obtain a first colloidal solution, and obvious Tyndall effect could be observed; and the second colloidal auxiliary agent was taken and added into the lithium source solution to obtain a second colloidal solution, and obvious Tyndall effect could also be observed;
step S4. 0.2g of polyethylene glycol 4000 was used as a surfactant, 53.80 g of sodium carbonate was taken (wt=0.985, 0.5 mol) and added into 500 g of water to dissolve to obtain a dispersing agent, the surfactant was added into a four-necked glass reactor containing 100 mL of water, the dispersing agent, the first colloidal solution, the second solution, and the phosphorus source solution prepared in the foregoing steps were added into the four-necked glass reactor and stirred at 1800 rpm, a reaction temperature was controlled to be 50°C, and a feeding rate of the first colloidal solution was controlled to be approximately 0.5 g/min, and a reaction pH value was controlled to be 7-13; and
step S5. after addition of all the material was completed, the material were aged at 60°C for 24 h, washed and filtered under nitrogen protection to obtain a manganese-containing phosphate precursor, which was then dried in vacuum at 120°C to obtain a manganese-containing phosphate precursor.

Preparation of cathode material:
In an argon atmosphere, the phosphate precursor was heated to 260°C and subjected to heating treatment for 60 h, and then cooled and ground to obtain the phosphate cathode material.

### Example 3

Differences from Example 1 were as follows: in the preparation of the phosphate precursor, the soluble transition metal salt in the step S1 was 84.51 g of manganese sulfate monohydrate (0.5 mol) and 139.01 g of ferrous sulfate heptahydrate (0.5 mol). In the preparation of cathode material, a heat temperature was 400°C, and heat treatment time was 12 h.

The rest are the same as Example 1, and will not be repeated here.

### Example 4

Differences from Example 1 were as follows: in the preparation of the phosphate precursor, the soluble transition metal salt in the step S1 was 28.11 g of cobalt sulfate heptahydrate (0.1 mol) and 250.20 g of ferrous sulfate heptahydrate (0.9 mol); in the step S2, the colloidal auxiliary agent was methyl cellulose.

In the preparation of cathode material, a heat temperature was 500°C, and heat treatment time was 12 h.

The rest are the same as Example 1, so it will not be repeated here.

### Example 5

Differences from Example 1 were as follows: in the preparation of the phosphate precursor, the soluble transition metal salt in the step S1 was 26.28g of nickel sulfate hexahydrate (0.1 mol), 250.20 g of ferrous sulfate heptahydrate (0.9 mol), and the soluble lithium salt was 42.39 g of lithium chloride (1 mol); in the step S2, the colloidal auxiliary agent was polypropylene alcohol.

In the preparation of cathode material, a heat temperature was 600°C, and heat treatment time was 8 h.

The rest are the same as Example 1, so it will not be repeated here.

### Example 6

Differences from Example 1 were as follows: in the preparation of the phosphate precursor, the soluble lithium salt in the step S1 was 42.39 g of lithium chloride (1 mol), and the phosphorus-containing compound was 136.09 g of monopotassium phosphate (1 mol); the dispersing agent in the step S4 was 112.22 g of potassium hydroxide (2 mol).

In the preparation of cathode material, a heat temperature was 600°C, and heat treatment time was 4 h.

The rest are the same as Example 1, so it will not be repeated here.

### Example 7

Differences from Example 1 were as follows: in the preparation of the phosphate precursor, the soluble lithium salt in the step S1 was 68.96 g lithium nitrate (1 mol). In the preparation of cathode material, a heat temperature was 550°C, and heat treatment time was 8 h.

The rest are the same as Example 1, so it will not be repeated here.

### Example 8

Differences from Example 1 were as follows: in the preparation of the phosphate precursor, the phosphorus-containing compound in the step S1 was 115.03 g of monoammonium phosphate (1 mol); the dispersing agent in the step S4 was 152.03 g of potassium carbonate (1 mol).

In the preparation of cathode material, a heat temperature was 450°C, and heat treatment time was 20 h.

The rest are the same as Example 1, so it will not be repeated here.

### Example 9

Differences from Example 1 were as follows: in the preparation of the phosphate precursor, the phosphorus-containing compound in the step S1 was 149.09 g of triammonium phosphate (1 mol); and the dispersing agent in the step S4 was 13.82 g of potassium carbonate (0.1 mol).

The rest are the same as Example 3, so it will not be repeated here.

### Example 10

Differences from Example 1 were as follows: in the preparation of the phosphate precursor, the solid content of the transition metal salt solution was 10%, the solid content of the lithium source solution was 4%, and the solid content of the phosphorus source solution was 5%.

The rest are the same as Example 3, so it will not be repeated here.

### Example 11

Differences from Example 1 were as follows: preparation of cathode material: 10 g of the phosphate precursor was taken and mixed with 0.26 g of dextrose monohydrate, and then subjected to ball mill for 20 min to obtain mixed powder, and the mixed powder was heated to 400°C for heat treatment for 8 h in a nitrogen atmosphere, and cooled and grounded to obtain the carbon-contained cathode material, where a mass ratio of carbon to lithium was 22.8%.

### Example 12

Differences from Example 11 were as follows: the carbon source was 0.36 g of polyvinyl pyrrolidone and subjected to ball mill for 120 min, and heated to 600°C for heat treatment for 8 h.

The rest are the same as Example 11, so it will not be repeated here.

### Example 13

Differences from Example 11 were as follows: the carbon source was 0.20 g of carbon nanotube and subjected to ball mill for 120 min, and heated to 350°C for heat treatment for 30 h.

The rest are the same as Example 11, so it will not be repeated here.

### Example 14

Differences from Example 11 were as follows: the carbon source was 0.15 g of graphite and subjected to ball mill for 180 min.

The rest are the same as Example 11, so it will not be repeated here.

**Comparative Example 1** - Neither colloidal auxiliary agent nor surfactant was added.

A preparation method for phosphate cathode material, differences of which from Example 1 were that neither colloidal auxiliary agent nor surfactant was added.

The rest are the same as Example 1, so it will not be repeated here.

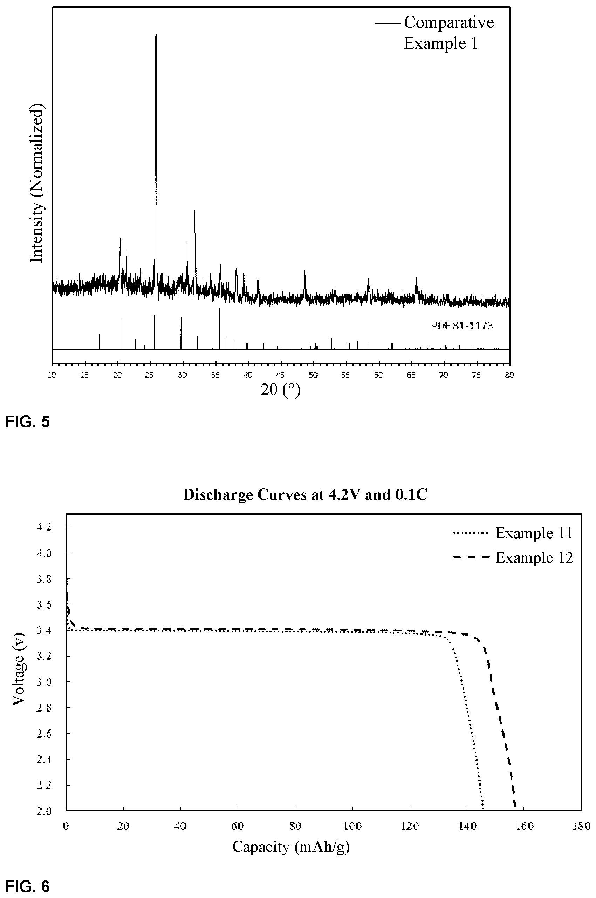

Since neither colloidal auxiliary agent nor surfactant was added, Comparative Example 1 suffered segregation of precipitation in the multiphase precipitation process, and the obtained precursor was also heated to 300°C for 48 h, then cooled and ground to obtain the cathode material, which, however, failed to form good lithium iron phosphate crystals. An XRD pattern of the cathode material obtained after heat treatment in Comparative Example 1 was shown in FIG. 5, and no obvious characteristic peaks of lithium iron phosphate (101), (111), (211), and (311) were observed.

A secondary battery, including an anode sheet, a separator, electrolyte, a shell and the foregoing cathode sheet, where the separator is configured to separate the anode sheet and the cathode sheet, and the shell is configured to install the cathode sheet, the electrolyte, the anode sheet and the electrolyte.

Preparation of cathode sheet: the foregoing prepared cathode material (phosphate cathode material or carbon-contained cathode material), a conductive agent (Super-P), and a binder (PVDF) were mixed evenly in a mass ratio of 97 : 1.5 : 1.5 to form lithium-ion battery cathode slurry with a certain viscosity, the slurry was then coated onto an aluminum foil of a current collector, dried at 85°C for cold pressing, cutting and drying was performed at a temperature of 110°C for 4 h under vacuum conductions to prepare the cathode sheet.

The anode sheet was a lithium metal sheet. The electrolyte was 1 mol/L of a lithium hexafluorophosphate (LiPF₆) solution dissolved in a mixed solvent composed of ethylene carbonate (EC), dimethyl carbonate (DMC), and ethyl methyl carbonate (EMC) (with a mass ratio of 1 : 1 : 1). The separator was Celgard 2400 microporous membrane.

Preparation of the lithium-ion battery: The cathode sheet, the anode sheet, the electrolyte, and the separator were assembled into a button cell in a glove box.

Performance test: the material obtained from Examples 1-14 and Comparative Example 1 were applied to the cathode sheet and the secondary battery for charge-discharge performance testing at 0.1C and 1C, with a charge cutoff voltage of 4.2 V and a discharge cutoff voltage of 2.0 V. Charge-discharge curves at 0.1C for the buttons cells prepared from the carbon-contained cathode material in Examples 11 and 12 were shown in FIG. 6. Test results were recorded in Table 1.

**Table 1**

| Item | First charge specific capacity at 0.1C (mAh/g) | First discharge specific capacity at 0.1C (mAh/g) | First coulombic efficiency at 0.1C (%) | First charge specific capacity at 1C (mAh/g) | First discharge specific capacity at 1C (mAh/g) | First coulombic efficiency at 1C (%) |
|---|---|---|---|---|---|---|
| Example 1 | 143.89 | 130.52 | 90.71 | 123.13 | 117.90 | 95.75 |
| Example 2 | 123.43 | 114.09 | 92.44 | 110.08 | 104.35 | 94.80 |
| Example 3 | 135.36 | 123.07 | 90.92 | 116.40 | 109.87 | 94.39 |
| Example 4 | 129.32 | 116.66 | 90.21 | 112.01 | 106.05 | 94.68 |
| Example 5 | 118.13 | 111.53 | 94.41 | 107.03 | 100.68 | 94.07 |
| Example 6 | 140.00 | 132.03 | 94.31 | 121.58 | 115.72 | 95.18 |
| Example 7 | 136.76 | 127.16 | 92.98 | 117.63 | 112.73 | 95.84 |
| Example 8 | 136.15 | 125.85 | 92.43 | 123.66 | 117.77 | 95.24 |
| Example 9 | 137.70 | 126.93 | 92.18 | 115.72 | 110.34 | 95.35 |
| Example 10 | 141.11 | 126.26 | 89.48 | 123.15 | 117.28 | 95.23 |
| Example 11 | 155.11 | 145.63 | 93.89 | 146.33 | 142.36 | 97.28 |
| Example 12 | 159.27 | 156.07 | 97.99 | 157.94 | 154.54 | 97.85 |
| Example 13 | 157.82 | 144.21 | 91.38 | 144.60 | 140.61 | 97.24 |
| Example 14 | 160.32 | 153.85 | 95.96 | 151.68 | 146.83 | 96.80 |
| Comparative Example 1 | 24.6 | 11.62 | 47.24 | 12.30 | 6.71 | 54.55 |

It can be concluded from Table 1 that the secondary battery prepared according to the present disclosure exhibits a significant improvement in charge and discharge capacities than those of the secondary battery in Comparative Example 1, featuring more stable charge discharge performance.

According to the disclosure and instruction of the above specification, those skilled in the art can make modifications and variations to the above examples. Therefore, the present disclosure is not limited to the above specific examples, and any obvious improvement, substitutions or variations made those skilled in the art on the basis of the present disclosure should fall within the protection scope of the present disclosure. In addition, although some specific terms are used in the specification, these terms are for convenience of description only and do not constitute any limitation to the present disclosure.

## Claims

1. A phosphate precursor, having a chemical formula of LiₓM_{y}(PO₄)_{(x+y)/2}A_{z}•wH₂O, wherein M is a transition metal element selected from one or more of Fe, Ti, V, Cr, Ni, Co, Mn, Al, Nb, Y, Zr, Sb, Mo, Sn, Ce, A is one or more of F⁻, OH⁻, CO₃²⁻, C₂O₄²⁻, and O²⁻, and 0.5≤x<1.2, 0.5<y≤1, 0≤z≤1, and 0.1≤w<8.

2. The phosphate precursor according to claim 1, wherein the phosphate precursor has characteristic peaks F1: 9.0°-11.5°, F2: 22.1°-22.8°, F3: 22.9°-23.5°, and F4: 24.5°-25.1° in an XRD pattern at a 2θ diffraction angle using a Cu target Kα1, and a peak intensity ratio of the characteristic peak F1 to the characteristic peak F3 is 0.02-100.

3. The phosphate precursor according to claim 1 or 2, wherein a mass fraction of lithium in the phosphate precursor is 1%-5.3%, and a mass ratio of the lithium to the transition metal element is 5.8%-30.3%, and a mass ratio of the lithium to phosphorus is 14.8%-31.6%.

4. The phosphate precursor according to claim 1 or 2, wherein a D₅₀ value of particles of the phosphate precursor is 0.05-20 µm.

5. The phosphate precursor according to claim 1 or 2, wherein morphology of the phosphate precursor is one or more of spherical, quasi-spherical, plate-like, and rod-like.

6. A preparation method for the phosphate precursor according to any one of claims 1-5, comprising the following steps:
step S1. dissolving soluble transition metal salt in a solvent to obtain a transition metal salt solution, dissolving soluble lithium salt in a solvent to obtain a lithium source solution, and dissolving a phosphorus-containing compound in a solvent to obtain a phosphorus source solution;
step S2. dispersing a polymer in a solvent and stirring to obtain a colloidal auxiliary agent;
step S3. adding the colloidal auxiliary agent to at least one of the transition metal salt solution, or the lithium source solution, or the phosphorus source solution obtained in the step S1 to obtain a colloidal solution;
step S4. adding a surfactant, a dispersing agent, the colloidal solution obtained in the step S3, and the remaining solutions obtained in the step S1 into a reactor, controlling a temperature, mixing and stirring under atmospheric conditions to induce multi-phase precipitation to obtain a precipitate; and
step S5. obtaining the phosphate precursor after the precipitate obtained in the step S4 is aged, washed and dried.

7. The preparation method for the phosphate precursor according to claim 6, wherein in the step S1, a solid content of the transition metal salt solution is 1.5%-30%, a solid content of the lithium source solution is 1.1%-27%, a solid content of the phosphorus source solution is 1%-25%, and the transition metal salt solution comprises one or more of the metal elements Fe, Ti, V, Cr, Ni, Co, Mn, Al, Nb, Y, Zr, Sb, Mo, Sn, Ce.

8. The preparation method for the phosphate precursor according to claim 6, wherein a preparation method for the colloidal auxiliary agent in the step S2 involves adding a polymer to the solvent, heating to 20°C-100°C, and stirring for 30-300 min; a weight percentage of the polymer in the colloidal auxiliary agent is 0.1%-20%; and in the step S3, a weight percentage of the polymer in the colloidal solution is 0.02%-2%, the polymer is one or a mixture of methyl cellulose, starch, polyacrylamide, polyvinyl pyrrolidone, polypropylene alcohol, agar, carrageenan, gum arabic, guar gum, tamarind gum.

9. The preparation method for the phosphate precursor according to claim 6, wherein the atmospheric conditions in the step S4 is nitrogen, argon or carbon dioxide, and the drying operation in the step S5 involves heating to 70°C-200°C in a vacuum environment and drying to a constant weight, or heating to 100°C-200°C in an air environment and drying to a constant weight.

10. A preparation method for phosphate cathode material, wherein the phosphate precursor according to any one of claims 1-5 is heated to 260°C-600°C in an oxygen-free atmosphere, and heat treatment is then performed for 2-72 h before cooling down.

11. Phosphate cathode material, wherein the phosphate cathode material is prepared by the preparation method for phosphate cathode material according to claim 10.

12. A preparation method for carbon-contained cathode material, wherein the phosphate precursor according to any one of claims 1-5 is mixed with a carbon source and then heated to 260°C-600°C in an oxygen-free atmosphere, heat treatment is then performed for 2-72 h, and the carbon source is one or more of glucose, fructose, sucrose, starch, graphite, graphene, carbon nanotube, or polyvinyl pyrrolidone.

13. Carbon-contained cathode material, wherein the carbon-contained cathode material is prepared by the preparation method for carbon-contained cathode material according to claim 12.

14. The carbon-contained cathode material according to claim 13, wherein a mass ratio of carbon to lithium in the carbon-contained cathode material is 11.4%-182.1%, and the carbon can be sourced from one or more of amorphous carbon, graphite, graphene, and carbon nanotube.

15. A cathode sheet, comprising a cathode current collector and a cathode coating applied to at least one surface of the cathode current collector, wherein the cathode coating comprises the carbon-contained cathode material according to claim 13 or 14.

16. A secondary battery, comprising the cathode sheet according to claim 15.
